Europäisches Patentamt

European Patent Office

Office européen des brevets

(19)

(11) Numéro de publication: **0 032 235**
**A1**

(12) # DEMANDE DE BREVET EUROPEEN

(21) Numéro de dépôt: **80108163.9**

(22) Date de dépôt: **29.12.80**

(51) Int. Cl.³: **C 02 F 3/20**
**C 02 F 3/22**

(30) Priorité: **09.01.80 FR 8000398**

(43) Date de publication de la demande:
**22.07.81 Bulletin 81·29**

(84) Etats contractants désignés:
**BE CH DE GB IT LI SE**

(71) Demandeur: **DEGREMONT**
**B.P. No 46**
**F-92151 Suresnes Cedex(FR)**

(72) Inventeur: **Durot, Jean**
**18, rue Francine**
**FR-78450 Villepreux(FR)**

(72) Inventeur: **Moreau, Ronald**
**3, rue des Bons Raisins**
**FR-92500 Rueil Malmaison(FR)**

(74) Mandataire: **Armengaud Ainé, Charles**
**Cabinet ARMENGAUD AINE 3, Avenue Bugeaud**
**F-75116 Paris(FR)**

(54) Dispositif d'introduction de gaz dans un liquide.

(57) Dispositif destiné à réaliser l'introduction de gaz à une certaine profondeur, dans une masse liquide, constitué par au moins un tube émulseur (1) immergé dans le liquide, disposé verticalement audessus d'une arrivée de gas (4), des moyens (2) étant prévus pour dévier l'émulsion sortant du tube.

Application aux installations de traitement des eaux usées au moyen de boues activées.

Fıɢ.1

EP 0 032 235 A1

1

## Dispositif d'introduction de gaz dans un liquide

La présente invention concerne un dispositif destiné à réaliser l'introduction de gaz dans une masse liquide, à une certaine profondeur, permettant de diffuser un gaz quelconque : air, oxygène, méthane, etc.., dans un liquide, en obtenant simultanément un effet de brassage et d'homogénéisation. Ce dispositif est utilisable plus particulièrement dans les installations de traitement des eaux usées au moyen de boues activées, mais s'applique également à toute installation nécessitant une diffusion de gaz dans un liquide à une certaine profondeur.

De tels dispositifs immergés dans un liquide ont déjà été décrits, en particulier pour la diffusion d'air dans les bassins de traitement des eaux par les boues activées, qui consistent en des dispositifs alimentés en air au moyen d'une tuyauterie véhiculant de l'air prélevé à l'atmosphère et refoulé par un compresseur et libérant cet air dans le liquide en bulles plus ou moins fines. Ces appareils doivent concilier un rendement de transfert élevé, c'est-à-dire qui transfère au liquide, sous forme dissoute, un pourcentage maximal de gaz insufflé, avec une capacité de brassage suffisante pour obtenir une bonne homogénéisation de la masse liquide et éventuellement le maintien en suspension des matières solides, point très important dans le cas de boues activées par exemple ; par ailleurs la consommation d'énergie doit être minimale.

Le moyen connu d'introduction de gaz dans un liquide le plus simple est constitué par une tuyauterie immergée horizontale, alimentée en gaz, air par exemple, et le libérant dans le liquide par des orifices calibrés régulièrement espacés le long d'une des génératrices du tuyau. Les bulles libérées en montant vers la surface, cèdent au milieu une partie de leurs constituants, oxygène par exemple, et créent une mise en circulation de la masse liquide par l'effet ascensionnel des zones émulsifiées de faible densité.

Ce dispositif présente l'inconvénient d'avoir un rendement énergétique de transfert faible et de n'effectuer qu'un brassage insuffisant en particulier des zones de fond de bassin, quand les besoins en gaz sont faibles et n'imposent qu'un débit de gaz réduit.

Un autre dispositif a déjà été décrit, qui permet d'améliorer le brassage sans augmentation du débit de gaz ; il consiste en un tube vertical, ouvert aux deux extrémités, destiné à canaliser le gaz insufflé, faisant ainsi office de pompe à émulsion et assurant un débit de transit important. La reprise et la recirculation des couches basses du liquide dans la masse sont donc mieux assurées que par le dispositif précédemment décrit, pour un même débit d'air ou de gaz. Mais le rendement de transfert n'est pas meilleur : en effet, l'amélioration du transfert de gaz, tel qu'oxygène, dû à la forte turbulence dans le tube, est annulée par la réduction du temps de séjour des bulles de gaz qui atteignent plus vite la surface libre du liquide.

Un troisième type de dispositif a également été décrit qui consiste en un tube formant émulseur muni intérieurement de chicanes de formes diverses destinées à favoriser les turbulences et à créer une perte de charge pour augmenter le temps de séjour des bulles. Le transfert de gaz, tel qu'oxygène, est ainsi amélioré mais ce dispositif présente l'inconvénient de freiner l'écoulement dans le tube et réduit donc les possibilités de pompage et de brassage.

La présente invention pallie ces inconvénients et permet d'améliorer sensiblement le transfert gazeux, donc le rendement énergétique tout en conservant un débit de pompage élevé.

Le dispositif d'introduction de gaz dans un liquide suivant l'invention est caractérisé en ce qu'il est constitué par un tube émulseur immergé dans le liquide, disposé verticalement au-dessus d'une arrivée de gaz, l'ouverture supérieure de ce tube émulseur étant orientée de telle sorte ou munie de moyens tels, que le flux ascendant d'émulsion gaz-liquide dans le tube soit dévié et à la limite inversé, à sa sortie du tube émulseur.

Dans une disposition préférée de l'invention l'ouverture du tube émulseur est surmontée d'une cloche de diamètre supérieur à celui du tube, l'extrémité du tube émulseur pénétrant à l'intérieur de la cloche d'une hauteur h inférieure à la profondeur de la cloche et fonction du débit de pompage souhaité.

Dans une disposition simplifiée de l'invention, le tube émulseur présente à sa partie supérieure, au moins un coude dont l'ouverture est dirigée vers le bas.

Les divers caractéristiques et avantages de l'invention ressortiront de la description qui va suivre de quelques-unes de ses formes possibles de réalisation. Il est bien précisé qu'il s'agit uniquement d'exemples et que toutes autres formes, proportions et dispositions pourraient être adoptées sans sortir du cadre de l'invention. Au cours de cette description, on se réfère aux dessins ci-joints qui montrent :

Fig. 1 une vue partielle schématique en coupe d'un bassin de traitement d'eaux équipé de deux dispositifs suivant l'invention ;

Fig. 2 et 3 des vues schématiques partielles, respectivement en coupe et en plan, d'un système de fixation de la cloche sur le tube émulseur ;

Fig. 4 et 5 des vues, analogues aux Fig. 2 et 3, d'un autre système de fixation de la cloche sur le tube émulseur ;

Fig. 6 et 7 des vues, analogues aux Fig. 2 et 3, montrant un système réglable de cette fixation ;

Fig. 8 une vue, également partielle et schématique, d'un autre système, réglable en fonctionnement, de cette fixation ;

Fig. 9 et 10, des vues, analogues aux Fig. 2 et 3, d'un autre système, également réglable en fonctionnement, de cette fixation ;

Fig. 11 et 12 des vues respectivement en coupe et en plan d'une disposition simplifiée du dispositif suivant l'invention.

Un dispositif suivant l'invention consiste en un tube diffuseur 1, ouvert à chaque extrémité, et dont l'ouverture supérieure est surmontée d'une cloche 2.

Ce tube, fonctionnant en émulseur, est disposé verticalement au-dessus d'orifices 3 percés dans la tuyauterie d'amenée de gaz 4. Cette tuyauterie d'amenée de gaz, placée à proximité du fond du bassin 5, est soutenue par les supports 6 du tube émulseur, eux-mêmes largement ajourés pour ne pas freiner le débit liquide entrant.

Les orifices 3 percés dans la tuyauterie généralement à la génératrice inférieure de celle-ci, sont calibrés pour assurer une perte de charge destinée à réaliser une équirépartition du débit de gaz entre les tubes diffuseurs émulseurs, dans le cas d'une pluralité de ces tubes. Le gaz libéré par les orifices est canalisé dans le tube émulseur par le courant de liquide. Après transit dans le tube 1 dans lequel l'effet de pompe à émulsion développe l'énergie hydraulique nécessaire à l'inversion de flux postérieure, l'émulsion liquide-gaz pénètre dans la cloche 2.

Cette cloche peut se présenter sous des formes diverses suivant les matériaux utilisés : cylindre à fond plat pour une fabrication en métal ou en béton armé ; arrondie avec fond à section ellipsoïdale ou sphéroïdale pour une fabrication en matière plastique rigide par exemple.

La cloche a un diamètre de 1, 5 à 2 fois celui du tube émulseur ; ce dernier pénètre dans la cloche d'une hauteur h réglée entre 0 et 1/20 de la hauteur totale du tube ; la profondeur p de la cloche est telle que p - h est de l'ordre de la moitié du diamètre du tube.

Dans la cloche l'émulsion est mise en forte turbulence et ressort en entraînant les bulles vers le bas à une vitesse de 1 m/seconde environ.

La cloche est fixée sur le tube par tous moyens ou systèmes quelconques convenables.

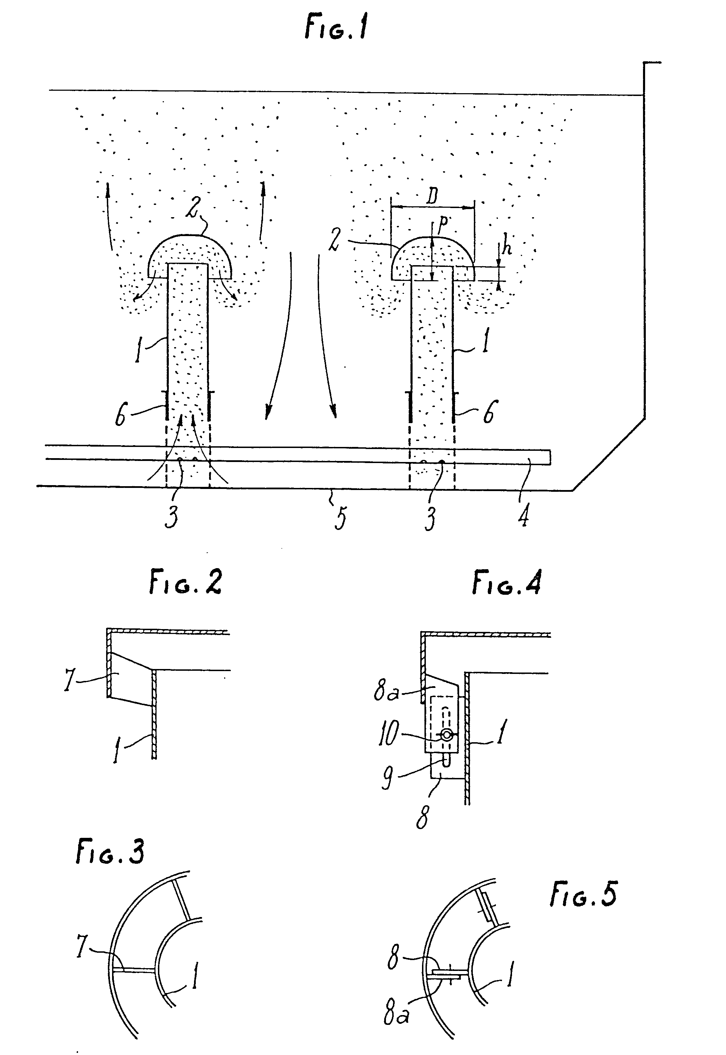

Dans l'exemple traité aux Fig. 2 et 3, la cloche est fixée à la face externe du tube émulseur par des ailettes radiales 7 solidaires du tube ou de la cloche, ou fixées les unes sur la cloche, les autres sur la face externe du tube, la disposition et la forme des ailettes étant variables. Par exemple, les ailettes ont avantageusement une forme en hélice avec une inclinaison de 0 à 45° sur la verticale et sont disposées entièrement à l'intérieur de la cloche ou en partie à l'extérieur, de façon à créer un effet de rotation de la masse liquide, lequel augmente la longueur du trajet et donc le temps de séjour des bulles de gaz dans le liquide.

Le fond de la cloche est avantageusement percé d'orifices permettant une fuite de gaz dans le liquide au-dessus de la cloche, un système de déflecteurs assurant la répartition du gaz.

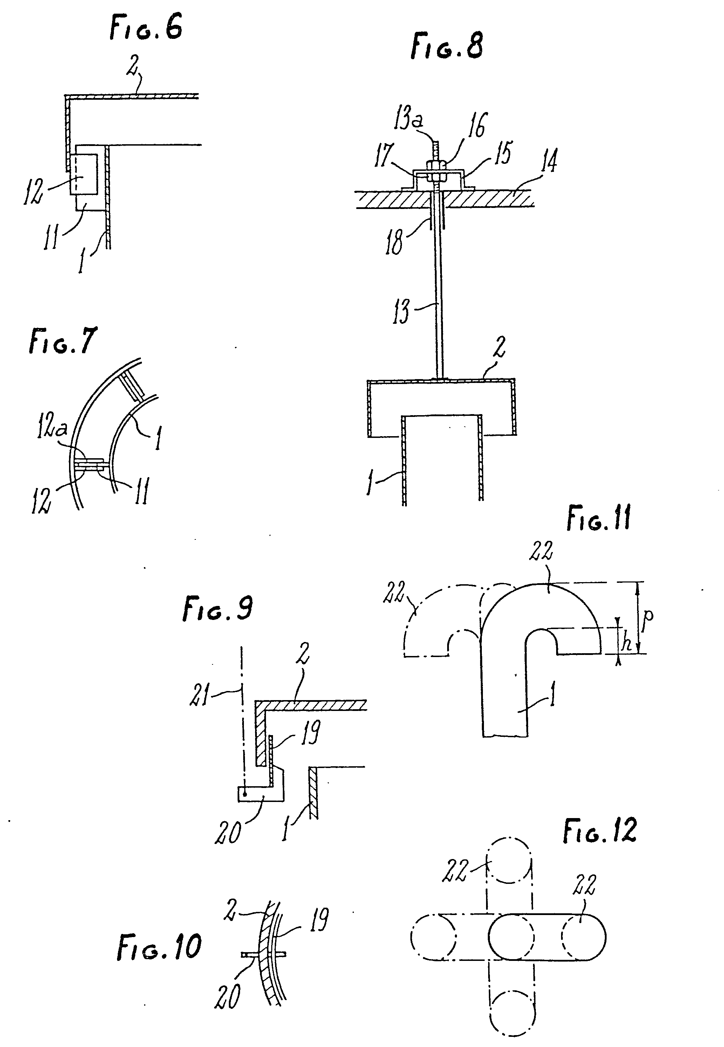

Pour permettre le réglage de l'enfoncement de la cloche sur le tube, on peut avantageusement faire appel à un système tel que celui représenté à titre d'exemple sur les Fig. 4 et 5. Dans ce système, le tube, sur sa paroi externe, et la cloche sur sa paroi interne, portent des ailettes radiales 8, régulièrement réparties sur la circonférence du dispositif et comportant chacune une lumière 9, dans laquelle se déplace un système de fixation 10 assurant le blocage l'une sur l'autre d'une ailette portée par le tube et d'une ailette portée par la cloche.

On peut également faire appel à un système du genre de celui représenté, également à titre d'exemple, sur les Fig. 6 et 7, dans lequel une ailette 11 que comporte le tube ( ou la cloche ) est encastrée entre deux ailettes 12, 12a, que présente la cloche ( ou le tube ).

Cependant, si l'on veut opérer, en fonctionnement du dispositif, l'enfoncement $\underline{h}$ de la cloche sur le tube, on peut avoir recours à un système tel que celui représenté à la Fig. 8.

La cloche 2 est reliée, par une attache rigide, ou articulée, à une tige de commande 13 manoeuvrée à partir d'une passerelle 14. L'extrémité supérieure 13a filetée de la tige passe dans un étrier 15 sur lequel sont prévus des écrous de réglage 16 et de blocage 17, dans lesquels se déplace la tige 13. Cette dernière traverse la passerelle 14 par un fourreau 18, éventuellement muni de moyens d'étanchéité.

Dans l'exemple qui vient d'être traité, la cloche est mobile.

On peut cependant laisser la cloche fixe, mais régler tout de même son enfoncement sur le tube, au moyen d'une jupe 19, que l'on fait comporter à la cloche et qui est supportée par des pattes 20 reliées par des suspentes 21 à une tige de manoeuvre telle que celle venant d'être décrite à propos de la Fig. 8.

Si, comme on l'a exposé plus haut, la cloche peut être en différentes matières ou matériaux, le tube émulseur lui-même peut être en différents matériaux : acier protégé, acier inoxydable, béton, matière plastique ; ce matériau est éventuellement différent de celui de la cloche, en particulier pour les gros appareils.

Dans le cas où l'on ne recherche pas un rendement énergétique maximal, on peut utiliser la disposition de l'invention telle que représentée par les Figures 11 et 12. Dans cette disposition, le tube 1 présente à sa partie supérieure un coude 22 dont l'ouverture est dirigée vers le bas.

Le dispositif suivant l'invention permet une amélioration sensible du transfert gazeux, donc du rendement énergétique, tout en conservant un débit de pompage élevé. En effet, la cloche surmontant le tube émulseur entraîne une inversion de sens du flux de l'émulsion à sa sortie du tube : le flux de l'émulsion sort de la cloche verticalement vers le bas à une vitesse de l'ordre de 1 m/seconde et entraîne les bulles de gaz qui redescendent et passent par une vitesse nulle avant de reprendre leur montée vers la surface, - alors que dans les dispositifs connus, le flux de l'émulsion sort du tube émulseur verticalement vers le haut à une vitesse de l'ordre de 2 m/seconde pour un tube émulseur classique, et de 0,7 m/seconde pour un tube à chicanes. Il y a donc, grâce au dispositif suivant l'invention, aussi bien en raison de la trajectoire des bulles que de la durée des échanges, amélioration nette du transfert gazeux.

D'autre part, une forte turbulence est réalisée dans la cloche.

Enfin, les bulles de gaz sont réparties sur une plus grande surface horizontale et de ce fait mieux dispersées dans la masse liquide que dans les appareils connus dans lesquels elles montaient en torche à leur sortie du tube émulseur, d'où une limitation des phénomènes de coalescence, néfastes en l'occurence.

Le trajet imposé aux bulles de gaz par la cloche surmontant le tube émulseur augmente sensiblement le temps de séjour du gaz dans le liquide, principalement dans les zones profondes et entraîne une nette augmentation du transfert gazeux, de l'ordre de 20 % supérieur au transfert obtenu dans les appareils classiques.

La meilleure répartition des bulles de gaz dans le liquide jusque dans les couches profondes, dûe à l'inversion du sens du flux de l'émulsion sortant du tube émulseur, favorise par ailleurs le maintien en suspension des matières solides.

## Revendications de brevet

1. Dispositif destiné à réaliser l'introduction de gaz à une certaine profondeur, dans une masse liquide, constitué par au moins un tube émulseur immergé dans le liquide, disposé verticalement au-dessus d'une arrivée de gaz, des moyens étant prévus pour dévier l'émulsion sortant du tube, caractérisé en ce que ledit tube émulseur est, à sa partie haute, disposé, conformé ou agencé, de façon à inverser totalement le flux de l'émulsion et à le guider vers le bas sur une hauteur $h$ comprise entre 0 et 1/20 de la hauteur totale du tube suivant le débit de gaz souhaité.

2. Dispositif suivant la revendication 1, caractérisé en ce que la partie haute du tube émulseur présente au moins un coude se rabattant de ladite hauteur $h$, et dont l'ouverture est dirigée vers le bas.

3. Dispositif suivant la revendication 1, caractérisé en ce que la partie haute du tube émulseur surmonté de façon connue d'une cloche de diamètre supérieur à celui du tube et de profondeur $p$, pénètre de ladite hauteur $h$ à l'intérieur de la cloche, la dimension $(p - h)$ étant de l'ordre de la moitié du diamètre du tube.

4. Dispositif suivant la revendication 3, caractérisé en ce que le tube émulseur est muni d'ailettes montées à la fois sur le tube et sur la cloche, par exemple, par encastrement, de façon à faire varier leur position réciproque en hauteur, en vue du réglage de la hauteur (h) de pénétration de la cloche sur le tube.

5. Dispositif suivant l'une quelconque des revendications 3 à 5, caractérisé par un réglage en fonctionnement de ce dispositif au moyen d'une tige de commande reliée à la cloche et manoeuvrée à partir d'une passerelle enjambant le bassin dans lequel est placé le dispositif et déplaçant verticalement la cloche, en vue de faire varier sa profondeur d'enfoncement sur le tube.

6. Dispositif suivant la revendication 5, caractérisé en ce que la tige de commande est reliée, non à la cloche, qui est fixe, mais à une jupe mobile que comporte la cloche.

7. Dispositif suivant la revendication 4, caractérisé en ce que les ailettes servant à la fixation du tube sur la cloche sont inclinées de façon à provoquer une rotation de l'émulsion passant par le tube.

Fig.1

Fig.2

Fig.4

Fig.3

Fig.5

Fig.6

Fig.7

Fig.8

Fig.9

Fig.10

Fig.11

Fig.12

| Catégorie | Citation du document avec indication, en cas de besoin, des parties pertinentes | Revendication concernée |
|---|---|---|
| A | <u>FR - A - 2 140 125</u> (ATLAS COPCO)<br><br>* page 2, ligne 36 - page 4, ligne 29 * | 1,4 |
| | -- | |
| | <u>FR - A - 2 308 405</u> (ATARA)<br><br>* page 1, ligne 29 - page 2, ligne 22; page 3, ligne 17 - page 5, ligne 11 * | 1 |
| | -- | |
| A | <u>DE - A - 2 453 670</u> (G. HAMBURGER) | |
| | ---------- | |

## DOCUMENTS CONSIDERES COMME PERTINENTS

**CLASSEMENT DE LA DEMANDE (Int. Cl. 3)**

C 02 F 3/20
3/22

**DOMAINES TECHNIQUES RECHERCHES (Int. Cl. 3)**

C 02 F 3/20
3/22

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cite pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 8-04-1981 | TEPLY |

OEB Form 1503.1   06.78